# EUROPEAN PATENT APPLICATION

(11) **EP 4 657 981 A1**
(43) Date of publication of application: **03.12.2025**
(21) Application number: 25177311.5
(22) Date of filing: 19.05.2025
(51) Int. Cl.: H05B 6/06

(54) **INDUCTION CIRCUIT FOR A COOKTOP**

(30) Priority: 30.05.2024 US 202418678540
(71) Applicant: Whirlpool Corporation, Benton Harbor, MI 49022 (US)
(72) Inventor: BARBATI, Mario, c/o WHIRLPOOL CORPORATION,2000 NORTH M-63, Benton Harbor, MI, 49022 (US); GALLIVANONI, Andrea, c/o WHIRLPOOL CORPORATION,2000 NORTH M-63, Benton Harbor, MI, 49022 (US); BALDO, Salvatore, c/o WHIRLPOOL CORPORATION,2000 NORTH M-63, Benton Harbor, MI, 49022 (US)
(74) Representative: Eisenführ Speiser

(57) **Abstract**

An induction circuit (11) includes a first induction coil (12a), at least one second induction coil (12b), and switching circuitry (13) including a shared half-bridge inverter (14a), a first half-bridge inverter (14b) cooperating with the shared half-bridge inverter (14a) to control current through the first induction coil (12a), at least one second half-bridge inverter (14c) cooperating with the shared half-bridge inverter (14a) to control current through the at least one second induction coil (12b), and a first auxiliary switch (15) in series with the first induction coil (12a) for selectively electrically coupling and electrically decoupling the first induction coil (12a) with at least one of the shared half-bridge inverter (14a) and the first half-bridge inverter (14b).

## Description

This application claims priority to U.S. 18/678,540, filed on May 30, 2024, entitled "INDUCTION CIRCUIT FOR A COOKTOP," the disclosure of which is hereby incorporated herein by reference in its entirety.

### BACKGROUND OF THE DISCLOSURE

The present disclosure relates to an induction circuit for a cooktop, more specifically, a switching arrangement for limiting leakage current in an induction circuit.

### SUMMARY OF THE DISCLOSURE

According to one aspect of the present disclosure, an induction circuit includes a first induction coil, at least one second induction coil, and switching circuitry including a shared half-bridge inverter, a first half-bridge inverter cooperating with the shared half-bridge inverter to control current through the first induction coil, at least one second half-bridge inverter cooperating with the shared half-bridge inverter to control current through the at least one second induction coil, and a first auxiliary switch in series with the first induction coil for selectively electrically coupling and electrically decoupling the first induction coil with at least one of the shared half-bridge inverter and the first half-bridge inverter.

According to yet another aspect, an induction circuit includes a first induction coil, a second induction coil, switching circuitry including, a shared half-bridge inverter, a first half-bridge inverter cooperating with the shared half-bridge inverter to control current through the first induction coil, a second half-bridge inverter cooperating with the shared half-bridge inverter to control current through the second induction coil, and a first auxiliary switch in series with the first induction coil for selectively electrically coupling and electrically decoupling the first induction coil with at least one of the shared half-bridge inverter and the first half-bridge inverter, and control circuitry in electrical communication with the switching circuitry, wherein the control circuitry is configured to control activation of the first auxiliary switch.

According to yet another aspect, an induction circuit includes a first induction coil, a second induction coil, switching circuitry including, a shared half-bridge inverter, a first half-bridge inverter cooperating with the shared half-bridge inverter to control current through the first induction coil, a second half-bridge inverter cooperating with the shared half-bridge inverter to control current through the second induction coil, a first auxiliary switch in series with the first induction coil for selectively electrically coupling and electrically decoupling the first induction coil with at least one of the shared half-bridge inverters and the first half-bridge inverter, and a second auxiliary switch in series with the second induction coil for selectively electrically coupling and electrically decoupling the second induction coil with at least one of the shared half-bridge inverter and the second half-bridge inverter.

These and other features, advantages, and objects of the present disclosure will be further understood and appreciated by those skilled in the art by reference to the following specification, claims, and appended drawings.

### BRIEF DESCRIPTION OF THE DRAWINGS

In the drawings:
FIG. 1 is a top perspective view of an induction cooktop;
FIG. 2 is a functional schematic of an induction circuit for an induction cooktop demonstrating exemplary first positions and second positions for auxiliary switching circuitry;
FIG. 3 is an electrical schematic of the induction circuit with the auxiliary switching circuitry in the first positions and second positions;
FIG. 4 is an electrical schematic of the induction circuit with the auxiliary switching circuitry in the first positions; and
FIG. 5 is an electrical schematic of the induction circuit with the auxiliary switching circuitry in the second positions.

The components in the figures are not necessarily to scale, emphasis instead being placed upon illustrating the principles described herein.

### DETAILED DESCRIPTION

The present illustrated embodiments reside primarily in combinations of method steps and apparatus components related to an induction circuit. Accordingly, the apparatus components and method steps have been represented, where appropriate, by conventional symbols in the drawings, showing only those specific details that are pertinent to understanding the embodiments of the present disclosure so as not to obscure the disclosure with details that will be readily apparent to those of ordinary skill in the art having the benefit of the description herein. Further, like numerals in the description and drawings represent like elements.

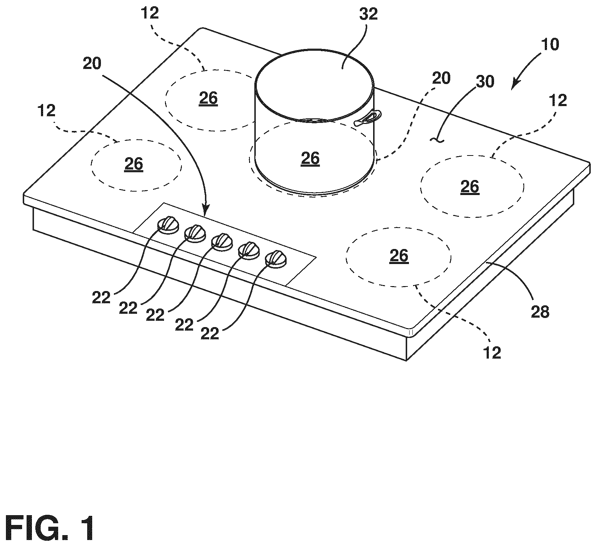

For purposes of description herein, the terms "upper," "lower," "right," "left," "rear," "front," "vertical," "horizontal," and derivatives thereof shall relate to the disclosure as oriented in FIG. 1. Unless stated otherwise, the term "front" shall refer to the surface of the element closer to an intended viewer, and the term "rear" shall refer to the surface of the element further from the intended viewer. However, it is to be understood that the disclosure may assume various alternative orientations, except where expressly specified to the contrary. It is also to be understood that the specific devices and processes illustrated in the attached drawings, and described in the following specification are simply exemplary embodiments of the inventive concepts defined in the appended claims. Hence, specific dimensions and other physical characteristics relating to the embodiments disclosed herein are not to be considered as limiting, unless the claims expressly state otherwise.

The terms "including," "comprises," "comprising," or any other variation thereof, are intended to cover a non-exclusive inclusion, such that a process, method, article, or apparatus that comprises a list of elements does not include only those elements but may include other elements not expressly listed or inherent to such process, method, article, or apparatus. An element preceded by "comprises a ... " does not, without more constraints, preclude the existence of additional identical elements in the process, method, article, or apparatus that comprises the element.

In general, the present disclosure provides for an arrangement of electronics for a cooktop 10. The arrangement includes an induction circuit 11 that limits electrical activation of induction coils 12 of the cooktop 10 during target inactivation periods by providing an additional set of switching components. The present disclosure further provides for enhanced cost efficiency by providing shared switching components for use with multiple induction coils 12. By providing the additional set of switching components (e.g., interrupters) with shared switching components (e.g., an inverter used for at least partially activating multiple induction coils 12), the circuitry that manages activation of the induction coils 12 can provide dynamic operation without incidental activation of one or more of the induction coils 12 that are not intended to be activated.

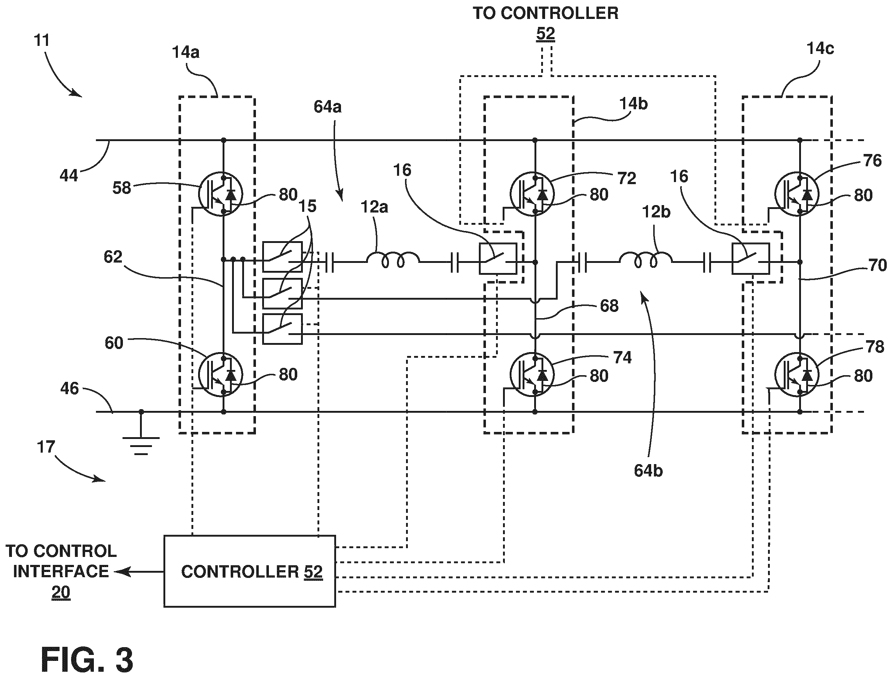

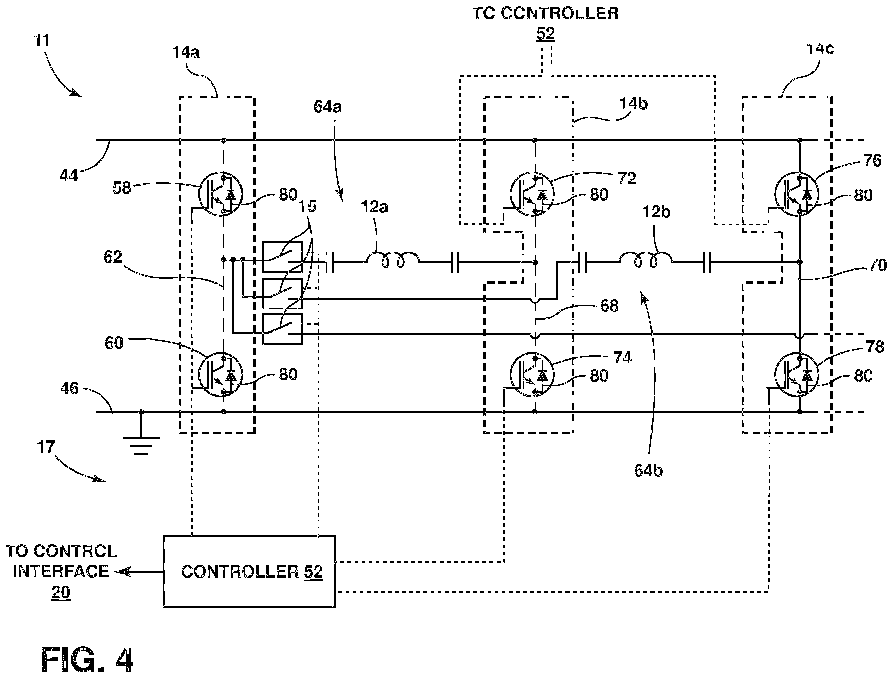

Referring generally to FIGS. 1-4, an induction circuit 11 includes a first induction coil 12a and a second induction coil 12b. The induction circuit 11 includes switching circuitry 13 that includes a shared half-bridge inverter 14a and a first half-bridge inverter 14b cooperating with the shared half-bridge inverter 14a to control current through the first induction coil 12a. The switching circuitry 13 also includes a second half-bridge inverter 14c cooperating with the shared half-bridge inverter 14a to control current through the second induction coil 12b, a first auxiliary switch 15 in series with the first induction coil 12a for selectively electrically coupling and electrically decoupling the first induction coil 12a with at least one of the shared half-bridge inverter 14a and the first half-bridge inverter 14b, and a second switch 16 in series with the second induction coil 12b for selectively electrically coupling and electrically decoupling the second induction coil 12b with at least one of the shared half-bridge inverter 14a and the second half-bridge inverter 14c. The induction circuit can also include control circuitry 17 (FIGS. 3 and 4) in electrical communication with the switching circuitry 13 and configured to control activation of the components of the switching circuitry 13.

Referring more particularly to FIG. 1, an induction cooktop 10 incorporating the induction circuit 11 may include a cooking area and a control interface 20 which may include knobs 22 and/or touch interfaces for controlling the induction cooktop 10. For example, the control interface 20 can be a portion of the control circuitry 17 for controlling power to one or more of the coils 12 of the induction cooktop 10 to achieve one or more target powers for one or more cooking zones 26 of the induction cooktop 10. A glass layer 28, or insulating layer, may form a cooking surface 30 and provide space between the coils 12 in the induction cooktop 10 and the cooking surface 30. It is contemplated that, while shown in FIG. 1 as having a circular shape, one or more of the coils 12 may have another polygonal or arcuate shape, such as a square, rectangle, a triangle, or the like. It is also contemplated that irregular polygonal shapes or partial rectangular shapes (e.g., rectangles with arcuate corners) may be provided. Accordingly, the cooktop 10 may incorporate one or more differently shaped coils 12, as will be described further herein. Further, the spacing and/or pattern of distribution of the coils 12 for the induction cooktop 10 may be different than pictured or the same as pictured. For example, the coils 12 may be arranged side to side or front to back to provide a free-form induction cooking area throughout the entire cooking surface 30 or a substantial part of the cooking surface 30. Further, different sizes of the coils 12 may be provided.

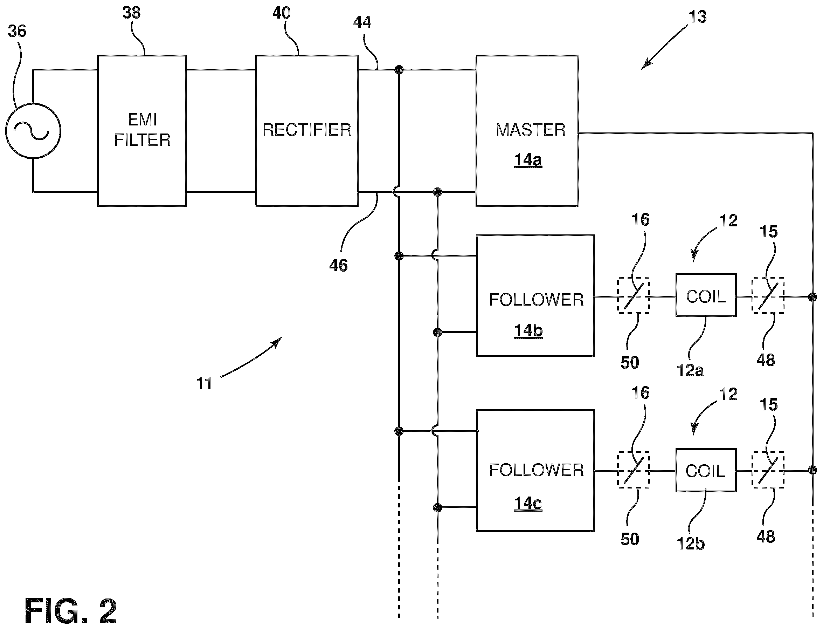

The induction cooktop 10 is operable with different types and numbers of cookware 32. For example, pots and pans having different shapes, material compositions, sizes, etc. can be heated via inductive coupling with the coils 12. Depending on the type of cookware 32 used, the electrical power drawn by the coil 12/ap-plied to the cookware 32 differs. For example, equivalent resistance of the cookware 32 can be specific to a combination of the applied frequency and the qualities of the cookware 32 (e.g., size, shape, materials, etc.). Multiple pots and pans can be heated simultaneously at different or the same power levels. For example, a first coil 12a (FIGS. 2-5) can be used to heat a first cookware 32 and a second coil 12b (FIGS 2-5) can be used to heat a second cookware 32. Although the first coil 12a and the second coil 12b can share common activation components of the induction circuit 11 (e.g., the shared half-bridge inverter 14a), the induction circuit 11 can independently operate each of the coils 12.

Referring now to FIG. 2, the induction circuit 11 is provided in reference to two exemplary coils 12 (i.e., a first coil 12a and a second coil 12b), though any number of coils 12 may be managed by the induction circuit 11. The induction circuit 11 may be powered via main power 36, which may be an alternating-current (AC) voltage. For example, the main power 36 may include 110VAC, 115VAC, 120VAC, 230VAC, 240VAC, 480VAC, or another AC signal typically provided for residential or commercial power distribution. The frequency of the main power 36 may be 50Hz, 60Hz. An electromagnetic interference (EMI) filter 38 is provided for reducing electromagnetic interference generated during high-frequency operation of the induction cooktop 10. This filter typically includes capacitors and inductors arranged to suppress unwanted electromagnetic radiation. Filtered power is provided to a rectifier 40 that converts alternating current power to direct current (DC) power provided along a DC bus that includes a positive node 44 and a negative node 46. One or more capacitors can be connected to the DC bus to smooth the DC voltage. Usually, a differential mode choke is connected between the rectifier 40 and the DC bus capacitors to form a filter together with the capacitors to further filter and smooth the DC voltage.

The switching circuitry 13 is downstream of the rectifier 40 and is powered by the DC bus. For example, a plurality of inverters 14a, 14b, 14c are electrically coupled with the DC bus. Each inverter 14a, 14b, 14c can be a half-bridge inverter. As demonstrated, for two coils 12, the induction circuit 11 can include three half-bridge inverters. For example, there may be a first full-bridge inverter that includes the first half-bridge inverter 14b and the shared half-bridge inverter 14a that are arranged to control current through the first coil 12a. A second full-bridge inverter includes the second half-bridge inverter 14c and the shared half-bridge inverter 14a for controlling current through the second coil 12b. Stated differently, the shared half-bridge inverter 14a is common to the first full-bridge inverter and the second full-bridge inverter.

Although two coils 12 and two full-bridge inverters are shown in the present example, it is contemplated that the shared half-bridge inverter 14a may be common to any number of full-bridge inverters that power a specific coil 12. For example, if five coils 12 are provided for the induction cooktop 10, a total of six half-bridge inverters may be provided (e.g., one shared half-bridge inverter 14a and five individual half-bridge inverters corresponding to the individual coils 12). The shared half-bridge inverter 14a may be referred to as a master inverter, or primary inverter 14a, and the first and second half-bridge inverters 14b, 14c may be referred to as slave inverters, followers 14b, 14c, or secondary inverters 14b, 14c.

With continued reference to FIG. 2, the switching circuitry 13 can include one or more auxiliary switches 15, 16 that interpose parts of the switching circuitry 13 and the coils 12. For example, a first auxiliary switch 15 can be at a first position 48 electrically interposing the shared half-bridge inverter 14a and a coil 12. A second auxiliary switch 16 can be at a second position 50 electrically interposing a given follower 14b, 14c and its corresponding coil 12. The auxiliary switches 15, 16 can provide for selectively limiting electrical current from flowing through the coils 12. For example, currents formed from parasitic capacitance can be limited from flowing through a coil 12 that would otherwise be subject to leakage currents. Auxiliary switches 15, 16 at either or both of the first position 48 and the second position 50 for one or more of the coils 12 can be provided.

Referring now to FIGS. 3-5, the control circuitry 17 is provided for controlling the half-bridge inverters 14a-c. For example, the control circuitry 17 may include a controller 52 that can control each half-bridge inverter 14a-14c. The controller 52 can include a processor and a memory. The memory stores instructions that, when executed by the processor, cause the controller 52 to perform various steps related to electrical activation and electrical sensing. For example, the controller 52 can be in communication with the control interface 20 for detecting one or more target power levels (e.g., temperatures, setpoints, heating levels,) for the cooking zones 26 of the induction cooktop 10 and, in response, the controller 52 can communicate activation signals to the switching circuitry 13 to cause the coil(s) 12 to induce eddy currents in the cookware 32, thereby achieving the one or more power levels. The controller 52 may also monitor feedback from the switching circuitry 13, such as voltages applied to or currents flowing through the coils 12. For example, the control circuitry 17 may monitor a voltage across and a current through each coil 12 via a voltage sensor (e.g., a voltage divider) and a current sensor (e.g., an ammeter), respectively. Other current sensing or voltage sensing devices may be employed. Further, feedback voltages or currents measured at other nodes of the induction circuit 11 may be monitored by the control circuitry 17.

With continued reference to FIGS. 3-5, the control circuitry 17 can control the switching circuitry 13 via communicating activation signals to the half-bridge inverters 14a, 14b, 14c. For example, the shared half-bridge inverter 14a can include a first switch 58 in series with a second switch 60 via a shared intermediate node 62. The first switch 58 interposes the positive node 44 of the DC bus and the shared intermediate node 62. The second switch 60 interposes the negative node 46 of the DC bus and the shared intermediate node 62. Each coil 12a, 12b is electrically coupled with the shared intermediate node 62 and is part of a resonant circuit 64a, 64b, respectively, each having an inductance and an effective resistance. For example, the first coil 12a can be part of a first resonant circuit 64a, and the second coil 12b can be part of a second resonant circuit 64b. The resonant circuit 64 with an equivalent resistance of the pot (not shown) can correspond to a combination of the cookware 32 and coil 12 that causes the cookware 32 to heat. Accordingly, the resonant circuits 64a, 64b presented may vary depending on the load.

The load is a series resonant circuit 64 including an inductor and a capacitor. The value of the resistance (not shown) is the electrical resistance value offered by the coil 12 together with the cookware 32 above it at a given working frequency. The resistance therefore depends on the given coil 12, the cookware 32, and the distance between them. Moreover, due to the skin effect, the resistance also depends on the frequency. Being a resonant network, the total impedance depends on the operating frequency. In particular, there will be a resonance frequency where the impedance will be resistive (condition in which the power transferred to the cookware 32 is maximum). As the working frequency varies, the impedance can be more inductive (frequencies greater than the resonance frequency) or more capacitive (frequencies lower than the resonance frequency). To achieve the maximum power delivery to the cookware 32, the switching circuitry 13 operates at frequencies near resonance, whereas operating at higher frequencies provides a lower power delivery.

With continued reference to FIGS. 3-5, each of the followers 14b, 14c includes an intermediate node 68, 70, respectively. For example, the first half-bridge inverter 14b includes a third switch 72, a fourth switch 74, and a first intermediate node 68 interposing the third switch 72 and the fourth switch 74. The third switch 72 interposes the positive node 44 and a first intermediate node 68. The fourth switch 74 interposes the first intermediate node 68 and the negative node 46. Similarly, the second full-bridge inverter includes a fifth switch 76, a sixth switch 78, and a second intermediate node 70 that interposes the fifth switch 76 and the sixth switch 78. The fifth switch 76 interposes the positive node 44 and the second intermediate node 70. The sixth switch 78 interposes the second intermediate node 70 and the negative node 46. The switches 58, 60, 72, 74, 76, 78 may include transistors or other switching devices. In some examples, the transistors are insulated-gate bipolar transistors (IGBTs). In some examples, the switches are Silicon Carbide transistors, metal-oxide-semiconductor field-effect transistors, or Gallium Nitride transistors. The transistors can store parasitic capacitances that discharge feedback currents following deactivation of the transistors. The transistors can also include antiparallel diodes 80 that can conduct leakage currents across the transistors following deactivation of the corresponding transistors.

Each resonant circuit 64a, 64b includes resonant capacitors electrically coupled with the corresponding coils 12a, 12b. The first resonant circuit 64a is electrically between the shared intermediate node 62 and the first intermediate node 68. The second resonant circuit 64b is electrically between the shared intermediate node 62 and the second intermediate node 70. As demonstrated in FIGS. 3-5, one or more auxiliary switches 15, 16 can be provided in series with one or more of the coils 12, such that opening of the auxiliary switches 15, 16 can prevent or limit current from flowing through the given coil 12, and closing of the auxiliary switches 15, 16 allows current to flow through the given coils 12. Accordingly, the auxiliary switches 15, 16 can be configured to limit the feedback current from passing through coils 12 that are not intended to activate (e.g., during an off state of a pulse-width modulated signal).

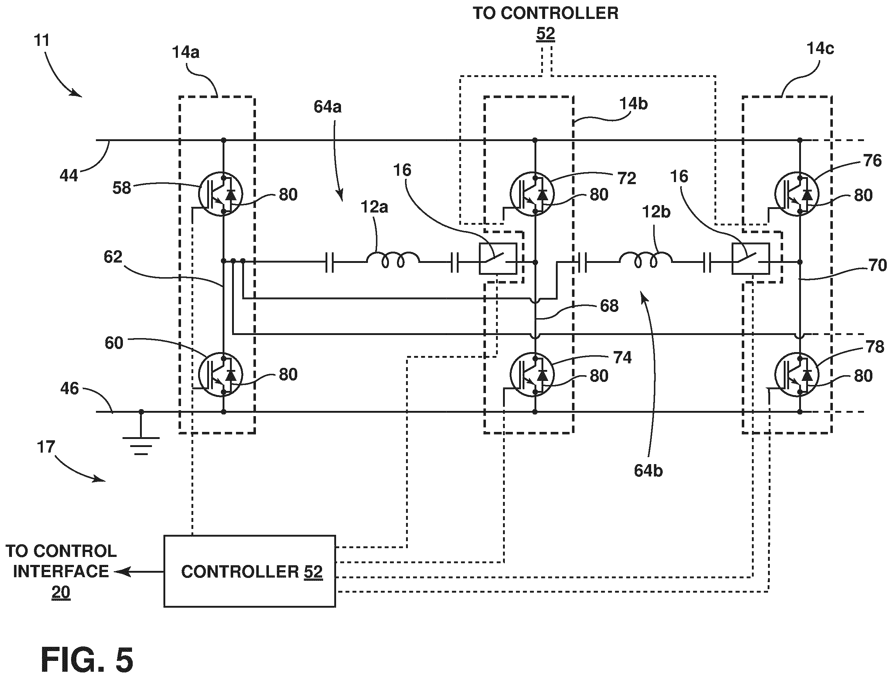

The auxiliary switches 15, 16 can include a first auxiliary switch 15 for each resonant circuit 64a, 64b, such that the first switches 15 can control current to/from the resonant circuits 64a, 64b, and the first and second intermediate nodes 68, 70, electrically interposing the shared intermediate node 62 and each of the first intermediate node 68 and the second intermediate node 70, as shown in FIGS. 3 and 4. The first auxiliary switches 15 can be omitted (FIG. 5). A second auxiliary switch 16 can be provided between each of the followers 14b, 14c, and the coils 12 corresponding to the given follower 14b, 14c, as shown in FIGS. 3 and 5. For example, one second auxiliary switch 16 can electrically interpose the first resonant circuit 64a and the first intermediate node 68, and another second auxiliary switch 16 can electrically interpose the second resonant circuit 64b and the second intermediate node 70. The second auxiliary switches 16 can be omitted (FIG. 4). By providing an auxiliary switch in series with each resonant circuit 64a, 64b, control of the auxiliary switches 15, 16 can selectively interrupt electrical connection to the resonant circuits 64.

In general, the switching circuitry 13 is controlled by the control circuitry 17 to produce alternating currents through the coils 12. By way of example, the first full-bridge inverter controls power to the first coil 12a by selectively activating the first switch 58, the second switch 60, the third switch 72, and the fourth switch 74 in a specific pattern. For example, the first switch 58 and the fourth switch 74 can be activated at the same time to cause current to flow through the load. The first switch 58 and the fourth switch 74 can then be deactivated, then the second switch 60 and the fourth switch 74 can be activated to cause current to flow through the load in an opposite direction than when the first switch 58 and the fourth switch 74 are activated.

With continued reference to FIGS. 3-5, the controller 52 is configured to communicate activation signals to the switching circuitry 13 at a common switching frequency. Stated differently, each switch in use (e.g., each switch used to achieve the target power level of a cooking zone 26) can be activated or deactivated at the same frequency. However, the activation signals can be communicated at different times to limit noise. For example, each of the first-sixth switches 58, 60, 72, 74, 76, 78 can be activated at a frequency of 100 kilo-Hertz (kHz). This common frequency can be changed by the control circuitry 17. By maintaining the same switching frequency, electrical or audible noise typically generated by unequal switching frequencies can be limited. To independently control current through the first coil 12a relative to current through the second coil 12b while maintaining the common switching frequency, the control circuitry 17 is configured to phase shift the activation signals to the switches and/or adjust the common switching frequency.

To further control current through the coils 12a, 12b, the control circuitry 17 is configured to control the auxiliary switches 15, 16. By way of example, during an ON command to the second coil 12b (e.g., activation of the shared half-bridge inverter 14a and the second half-bridge inverter 14c), a leakage current can ordinarily pass through the first coil 12a, which is not intended to be activated, through the parasitic capacitance and the antiparallel diodes 80 of the switches of the first half-bridge inverter 14b. In reference to an ON cycle of the first switch 58 and the sixth switch 78 (to activate the second coil 12b), the leakage current through the first coil 12a can occur without the auxiliary switches 15, 16. This is because, for example, the resonant circuit 64a and the two parasitic capacitance across switches 72 and 74 (which can be seen in parallel for this purpose) act as a voltage divider; therefore, when voltage at intermediate node 62 rises, voltage at intermediate node 68 rises as well. In order to do so, however, there must be current flowing in the two parasitic capacitances, and this current can only arrive there by flowing through resonant circuit 64a.

The auxiliary switches 15, 16 limit the leakage current. By providing at least one auxiliary switch in series with each coil 12a, 12b, control of the auxiliary switches 15,16 can limit the leakage current. As demonstrated in FIGS. 3-5, the auxiliary switches 15, 16 can be placed between the shared half-bridge inverter 14a and the given coil 12 and/or between the follower 14b, 14c, and the corresponding coil 12.

The auxiliary switches 15, 16 can include any type of electronic switch. In some examples, the auxiliary switches 15, 16 are relays. In other examples, the auxiliary switches 15, 16 are transistors or other electronic switches. The auxiliary switches 15, 16 can be normally-open or normally-closed.

In operation, the control circuitry 17 can open one or more of the switches corresponding to the coil 12 that is not intended to be activated. For example, during an OFF phase of a PWM signal to the first coil 12a (or when the first coil 12a is not being operated), the control circuitry 17 can control the auxiliary switches in series with the first coil 12a to be opened, and control the auxiliary switches of activated coils 12 to be closed. The control circuitry 17 can also control activation of the shared half-bridge and the followers 14b, 14c, as previously described.

The present "split-bridge" arrangement, in combination with the auxiliary switch arrangement, can provide greater flexibility of control relative to other arrangements.

According to one aspect of the present disclosure, an induction circuit includes a first induction coil, at least one second induction coil, and switching circuitry including a shared half-bridge inverter, a first half-bridge inverter cooperating with the shared half-bridge inverter to control current through the first induction coil, at least one second half-bridge inverter cooperating with the shared half-bridge inverter to control current through the at least one second induction coil, and a first auxiliary switch in series with the first induction coil for selectively electrically coupling and electrically decoupling the first induction coil with at least one of the shared half-bridge inverter and the first half-bridge inverter.

According to one aspect of the present disclosure, the first auxiliary switch electrically interposes the shared half-bridge inverter and the first induction coil.

According to one aspect of the present disclosure, the first auxiliary switch electrically interposes the first half-bridge inverter and the first induction coil.

According to one aspect of the present disclosure, the induction circuit includes a second auxiliary switch in series with the at least one second induction coil.

According to one aspect of the present disclosure, the induction circuit includes a second auxiliary switch in series with the first induction coil.

According to one aspect of the present disclosure, the first induction coil electrically interposes the first auxiliary switch and the second auxiliary switch.

According to one aspect of the present disclosure, the second auxiliary switch is a relay.

According to one aspect of the present disclosure, the at least one second half-bridge inverter includes a plurality of second half-bridge inverters and the at least one second induction coil includes a plurality of second induction coils.

According to one aspect of the present disclosure, the induction circuit includes control circuitry in electrical communication with the switching circuitry, wherein the control circuitry is configured to control activation of the first auxiliary switch.

According to one aspect of the present disclosure, the control circuitry is configured to deactivate the first auxiliary switch while the shared half-bridge inverter and the second half-bridge inverter are activated.

According to one aspect of the present disclosure, the first half-bridge inverter includes a transistor and a capacitor in parallel with the transistor, wherein the capacitor is operable to store energy following deactivation of the first half-bridge inverter.

According to one aspect of the present disclosure, the deactivation of the first auxiliary switch limits the energy from discharging as leakage current through the first induction coil while the first half-bridge inverter is off.

According to one aspect of the present disclosure, the transistor is an insulated gate bipolar transistor.

According to one aspect of the present disclosure, the induction circuit comprises an antiparallel diode operably coupled with the transistor such that the antiparallel diode conducts the leakage current.

According to one aspect of the present disclosure, the first auxiliary switch is a relay.

According to one aspect of the present disclosure, an induction circuit includes a first induction coil, a second induction coil, switching circuitry including, a shared half-bridge inverter, a first half-bridge inverter cooperating with the shared half-bridge inverter to control current through the first induction coil, a second half-bridge inverter cooperating with the shared half-bridge inverter to control current through the second induction coil, and a first auxiliary switch in series with the first induction coil for selectively electrically coupling and electrically decoupling the first induction coil with at least one of the shared half-bridge inverter and the first half-bridge inverter, and control circuitry in electrical communication with the switching circuitry, wherein the control circuitry is configured to control activation of the first auxiliary switch.

According to one aspect of the present disclosure, the first auxiliary switch electrically interposes the shared half-bridge inverter and the first coil.

According to one aspect of the present disclosure, the first auxiliary switch electrically interposes the first half-bridge inverter and the first coil.

According to one aspect of the present disclosure, the induction circuit includes a second auxiliary switch in series with the second induction coil.

According to one aspect of the present disclosure, the induction circuit includes a second auxiliary switch in series with the first induction coil.

According to one aspect of the present disclosure, the first induction coil electrically interposes the first auxiliary switch and the second auxiliary switch.

According to one aspect of the present disclosure, the first auxiliary switch is a relay.

According to one aspect of the present disclosure, the control circuitry is configured to deactivate the first auxiliary switch while the shared half-bridge inverter and the second half-bridge inverter are activated.

According to one aspect of the present disclosure, an induction circuit includes a first induction coil, a second induction coil, switching circuitry including, a shared half-bridge inverter, a first half-bridge inverter cooperating with the shared half-bridge inverter to control current through the first induction coil, a second half-bridge inverter cooperating with the shared half-bridge inverter to control current through the second induction coil, a first auxiliary switch in series with the first induction coil for selectively electrically coupling and electrically decoupling the first induction coil with at least one of the shared half-bridge inverter and the first half-bridge inverter, and a second auxiliary switch in series with the second induction coil for selectively electrically coupling and electrically decoupling the second induction coil with at least one of the shared half-bridge inverter and the second half-bridge inverter.

According to one aspect of the present disclosure, the induction circuit includes control circuitry in electrical communication with the switching circuitry, wherein the control circuitry is configured to control activation of the first auxiliary switch and control activation of the second auxiliary switch.

It will be understood by one having ordinary skill in the art that construction of the described disclosure and other components is not limited to any specific material. Other exemplary embodiments of the disclosure disclosed herein may be formed from a wide variety of materials, unless described otherwise herein.

For purposes of this disclosure, the term "coupled" (in all of its forms, couple, coupling, coupled, etc.) generally means the joining of two components (electrical or mechanical) directly or indirectly to one another. Such joining may be stationary in nature or movable in nature. Such joining may be achieved with the two components (electrical or mechanical) and any additional intermediate members being integrally formed as a single unitary body with one another or with the two components. Such joining may be permanent in nature or may be removable or releasable in nature unless otherwise stated.

It is also important to note that the construction and arrangement of the elements of the disclosure as shown in the exemplary embodiments is illustrative only. Although only a few embodiments of the present innovations have been described in detail in this disclosure, those skilled in the art who review this disclosure will readily appreciate that many modifications are possible (e.g., variations in sizes, dimensions, structures, shapes, and proportions of the various elements, values of parameters, mounting arrangements, use of materials, colors, orientations, etc.) without materially departing from the novel teachings and advantages of the subject matter recited. For example, elements shown as integrally formed may be constructed of multiple parts or elements shown as multiple parts may be integrally formed, the operation of the interfaces may be reversed or otherwise varied, the length or width of the structures and/or members or connector or other elements of the system may be varied, the nature or number of adjustment positions provided between the elements may be varied. It should be noted that the elements and/or assemblies of the system may be constructed from any of a wide variety of materials that provide sufficient strength or durability, in any of a wide variety of colors, textures, and combinations. Accordingly, all such modifications are intended to be included within the scope of the present innovations. Other substitutions, modifications, changes, and omissions may be made in the design, operating conditions, and arrangement of the desired and other exemplary embodiments without departing from the spirit of the present innovations.

It will be understood that any described processes or steps within described processes may be combined with other disclosed processes or steps to form structures within the scope of the present disclosure. The exemplary structures and processes disclosed herein are for illustrative purposes and are not to be construed as limiting.

## Claims

1. An induction circuit (11) comprising:
a first induction coil (12a);
at least one second induction coil (12b); and
switching circuitry (13) including:
a shared half-bridge inverter (14a);
a first half-bridge inverter (14b) cooperating with the shared half-bridge inverter (14a) to control current through the first induction coil (12a);
at least one second half-bridge inverter (14c) cooperating with the shared half-bridge inverter (14a) to control current through the at least one second induction coil (12b); and
a first auxiliary switch (15) in series with the first induction coil (12a) for selectively electrically coupling and electrically decoupling the first induction coil (12a) with at least one of the shared half-bridge inverter (14a) and the first half-bridge inverter (14b).

2. The induction circuit (11) of claim 1, wherein the first auxiliary switch (15) electrically interposes the shared half-bridge inverter (14a) and the first induction coil (12a).

3. The induction circuit (11) of claim 1, wherein the first auxiliary switch (15) electrically interposes the first half-bridge inverter (14b) and the first induction coil (12a).

4. The induction circuit (11) of any one of claims 1-3, further comprising:
a second auxiliary switch (16) in series with the at least one second induction coil (12b).

5. The induction circuit (11) of any one of claims 1-3, further comprising:
a second auxiliary switch (16) in series with the first induction coil (12a).

6. The induction circuit (11) of claim 5, wherein the first induction coil (12a) electrically interposes the first auxiliary switch (15) and the second auxiliary switch (16).

7. The induction circuit (11) of any one of claims 4-6, wherein the second auxiliary switch is a relay.

8. The induction circuit (11) of any one of claims 1-7, wherein the at least one second half-bridge inverter (14c) includes a plurality of second half-bridge inverters and the at least one second induction coil (12b) includes a plurality of second induction coils.

9. The induction circuit (11) of any one of claims 1-8, further comprising:
control circuitry (17) in electrical communication with the switching circuitry (13), wherein the control circuitry (17) is configured to control activation of the first auxiliary switch (15).

10. The induction circuit (11) of claim 9, wherein the control circuitry (17) is configured to:
deactivate the first auxiliary switch (15) while the shared half-bridge inverter (14a) and the second half-bridge inverter (14c) are activated.

11. The induction circuit (11) of any one of claims 1-10, wherein the first half-bridge inverter (14b) includes a transistor and a capacitor in parallel with the transistor, wherein the capacitor is operable to store energy following deactivation of the first half-bridge inverter (14b).

12. The induction circuit (11) of claim 11, wherein the deactivation of the first auxiliary switch (15) limits the energy from discharging as leakage current through the first induction coil (12a) while the first half-bridge inverter (14b) is off.

13. The induction circuit (11) of claim 12, wherein the transistor is an insulated gate bipolar transistor.

14. The induction circuit (11) of claim 13, comprising:
an antiparallel diode (80) operably coupled with the transistor such that the antiparallel diode (80) conducts the leakage current.

15. The induction circuit (11) of any one of claims 1-14, wherein the first auxiliary switch (15) is a relay.
